# FASCICULE DE BREVET EUROPEEN

(11) **EP 2 655 422 B1**
(45) Date de publication et mention de la délivrance du brevet: **25.02.2015**
(21) Numéro de dépôt: 11802096.5
(22) Date de dépôt: 21.12.2011
(51) Int. Cl.: B60C 1/00, C08C 1/14, C08J 3/22, C08K 5/54

(54) **PROCEDE DE PREPARATION D'UN MELANGE-MAÎTRE EN PHASE LIQUIDE**
VERFAHREN ZUR MASTERBATCH-HERSTELLUNG IN DER FLÜSSIGEN PHASE
PROCESS FOR PREPARING A MASTERBATCH IN THE LIQUID PHASE

(30) Priorité: 23.12.2010 FR 1061183
(43) Date de publication de la demande: 30.10.2013
(73) Titulaire: Compagnie Générale des Etablissements Michelin, 63000 Clermont-Ferrand (FR); MICHELIN Recherche et Technique S.A., 1763 Granges-Paccot (CH); Bibette, Jérôme, 75005 Paris (FR); Martinez Pedrero, Fernando, 28040 Madrid (ES)
(72) Inventeur: BIBETTE, Jérôme, F-75005 Paris (FR); MARTINEZ PEDRERO, Fernando, E-28040 Madrid (ES); DE GAUDEMARIS, Benoît, F-63040 Clermont-Ferrand Cedex 09 (FR); BERRIOT, Julien, F-63040 Clermont-Ferrand Cedex 09 (FR)
(74) Mandataire: Cohen, Sylvia
(86) Numéro de dépôt international: PCT/EP2011/073664
(87) Numéro de publication internationale: WO 2012/085137

(56) Documents cités:
- EP-A1- 1 834 980
- WO-A2-01/10946
- DATABASE WPI Week 201061 Thomson Scientific, London, GB; AN 2010-K86077 XP002645883, & JP 2010 189511 A (TOYO RUBBER IND CO LTD) 2 septembre 2010 (2010-09-02)
- DATABASE WPI Week 200820 Thomson Scientific, London, GB; AN 2008-C69991 XP002645884, & JP 2007 224067 A (BRIDGESTONE CORP) 6 septembre 2007 (2007-09-06)

## Description

L'invention concerne un procédé de préparation d'un mélange-maître en phase liquide d'un ou plusieurs élastomères diéniques, en particulier un latex de caoutchouc naturel, et d'une ou plusieurs charges.

On entend par « mélange-maître » (couramment désigné par son nom anglais « masterbatch »): un composite à base d'élastomère dans lequel a été introduit une ou plusieurs charges et éventuellement d'autres additifs.

Pour obtenir les propriétés de renforcement optimales conférées par une charge dans une bande de roulement de pneumatique et ainsi une haute résistance à l'usure, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

Or, afin d'améliorer la dispersiblité de la charge dans la matrice élastomérique, il est connu de recourir à un mélange d'élastomère et de charge en phase liquide. Pour ce faire, il est fait appel à un élastomère sous forme de latex, et à une dispersion aqueuse de la charge, couramment appelée slurry.

Dès 1955, le problème de la dispersion uniforme des charges, et notamment du noir de carbone au sein du caoutchouc était déjà posé. Ainsi, il est connu du document BE 541816 un procédé de préparation d'un mélange-maître de caoutchouc et de noir de carbone en phase liquide. Ce procédé se fait en continu et utilise des chocs hydrauliques ou une violente agitation mécanique pour réaliser la dispersion du noir de carbone au sein de la matrice élastomérique.

Des charges autres que le noir de carbone peuvent être utilisées, telles que la silice.

Le brevet US 5,763,388 enseigne un procédé de préparation en phase liquide d'un mélange-maître d'un latex de polymère et de silice en tant que charge, comprenant l'incorporation au sein du latex de silice modifiée, c'est-à-dire ayant réagit avec un agent de couplage. Selon ce document, cette modification de la silice permet de disperser uniformément la silice modifiée au sein du latex de polymère.

Le document WO2010/011345 divulgue, quant à lui l'hydrophobation de la silice afin d'agir sur le grillage et la viscosité du mélange-maître obtenu.

Il ressort de ces documents, qu'il est difficile de contrôler l'homogénéité de la répartition des charges au sein du mélange-maître. Le facteur limitant étant surtout lié à la phase de coagulation, qui est difficilement contrôlable.

Ainsi, il est recherché un procédé de préparation d'un mélange-maître conduisant à un mélange-maître dont la répartition de la charge est uniforme dans tout le produit, dont le rendement massique et le ratio charge/élastomère sont satisfaisants, ce procédé devant être facile à mettre en oeuvre à partir d'équipements simples.

De plus, il serait intéressant de pouvoir mieux contrôler, voir de commander les phases d'homogénéisation et de coagulation de manière à pouvoir agir sur la répartition de la charge au sein du coagulum.

Or, les demanderesses ont découvert qu'il était possible de contrôler l'homogénéisation du mélange de l'élastomère et de la charge avant la phase de coagulation permettant ainsi d'améliorer la répartition des charges dans la matrice élastomérique, de faire participer l'ensemble des charges présentes dans la matrice conduisant ainsi à un très bon rendement massique en respectant le taux de charge préalablement introduit.

L'invention porte ainsi sur un procédé de préparation d'un mélange-maître en phase liquide à base d'un ou plusieurs élastomères diéniques et d'une ou plusieurs charges ne coagulant pas spontanément avec ledit latex, comprenant les étapes successives suivantes :
- réalisation d'une dispersion aqueuse stable et homogène (C), par mélange
   d'un ou plusieurs latex d'élastomère diénique (A) avec
   une ou plusieurs dispersions aqueuses stables (B) d'une ou plusieurs charges ne coagulant pas spontanément avec ledit latex, et qui sont partiellement hydrophobées,
- homogénéisation de la dispersion aqueuse (C),
- coagulation au sein de la dispersion aqueuse (C) du latex d'élastomère diénique avec les charges ne coagulant pas spontanément avec ledit latex par apport d'énergie mécanique,
- récupération du coagulum, puis
- séchage du coagulum récupéré pour obtenir le mélange-maître.

L'invention porte également sur un mélange-maître d'élastomère diénique et de charge préparé selon le procédé décrit ci-dessus.

L'invention a aussi pour objet une composition de caoutchouc à base d'au moins un mélange-maître d'élastomère diénique et de charge ne coagulant pas spontanément avec ledit latex, préparé selon le procédé décrit ci-dessus, un article fini ou semi-fini comportant une composition telle que définie ci-dessus et une bande de roulement de pneumatique comportant une composition telle que définie ci-dessus.

L'invention a enfin pour objet un pneumatique ou produit semi-fini comportant au moins une composition de caoutchouc telle que définie ci-dessus.

D'autres objets, caractéristiques, aspects et avantages de l'invention apparaîtront encore plus clairement à la lecture de la description et des exemples qui suivent.

Par homogène, on entend au sens de la présente invention et de façon classique pour un homme du métier, que la concentration en charges et/ou en latex d'élastomère dans un volume donné soit identique à la concentration en charges et/ou en latex dans le volume total du mélange-maître ou de la dispersion.

L'homme du métier saura vérifier l'homogénéité de la dispersion, si besoin par des mesures de concentration de la charge et/ou du latex d'élastomère à partir de plusieurs prélèvements effectués à différents endroits du volume (par exemple en surface ou plus en profondeur dans la cuve) de la dispersion.

Le but recherché est d'éviter la formation de poches de dispersion de charges au sein du mélange-maître, communément appelées agglomérats.

Par l'expression : composition « à base de », il faut entendre une composition comportant le mélange et/ou le produit de réaction des différents constituants utilisés, certains de ces constituants de base étant susceptibles de, ou destinés à réagir entre eux, au moins en partie, lors des différentes phases de fabrication de la composition, en particulier au cours de sa réticulation chimique.

Dans la présente description, sauf indication expresse différente, tous les pourcentages (%) sont des pourcentages en masse. D'autre part, tout intervalle de valeurs désigné par l'expression "entre a et b" représente le domaine de valeurs allant de plus de a à moins de b (c'est-à-dire bornes a et b exclues), tandis que tout intervalle de valeurs désigné par l'expression "de a à b" signifie le domaine de valeurs allant de a jusqu'à b (c'est-à-dire incluant les bornes strictes a et b).

L'unité de quantité « pce » signifie parties en poids pour cent parties d'élastomère.

### Réalisation de la dispersion aqueuse (C)

La première étape du procédé selon l'invention consiste à réaliser une dispersion aqueuse stable et homogène (C) à partir d'un ou plusieurs latex d'élastomère (A) avec une ou plusieurs dispersions aqueuses de charges (B).

Par dispersion aqueuse stable, on attend au sens de la présente invention une dispersion dans laquelle les constituants de cette dispersion ne coagulent pas, ne floculent pas, ne comportent pas d'agglomérat, et ne sédimentent pas, du moins au niveau macroscopique, c'est-à-dire que son état n'évolue pas dans un temps déterminé à température ambiante sous une pression atmosphérique.

Plus particulièrement, la dispersion stable n'évolue pas au niveau macroscopique dans le temps par rapport à la coagulation spontanée résultant du mélange du noir de carbone et d'un latex de caoutchouc naturel.

### Latex d 'élastomère diénique (A)

Par élastomère sous forme de latex, on entend au sens de la présente invention un élastomère se présentant sous forme de particules d'élastomère dispersées dans l'eau

L'invention concerne les latex d'élastomères diéniques, les élastomères diéniques étant définis comme suit :

Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Parmi ces élastomères diéniques, on distingue par ailleurs le caoutchouc naturel et les élastomères synthétiques.

Pour le caoutchouc naturel (NR) qui convient particulièrement à l'invention, ce caoutchouc naturel existe sous différentes formes comme le détail le chapitre 3 « Latex concentrates : properties and composition », de K.F. Gaseley, A.D.T. Gordon et T.D. Pendle dans « Naturel Rubber Science and Technology », A.D. Roberts, Oxford University Press - 1988.

En particulier plusieurs formes de latex de caoutchouc naturel sont commercialisés : les latex de caoutchouc naturel dits « de champ » (« latex field »), les latex de caoutchouc naturel dits « concentrés » (« concentrated natural rubber latex »), les latex epoxydés (« ENR »), les latex déprotéinisés, les latex ayant subi une étape de clivage de liaison amide ou encore les latex prévulcanisés. Le latex de caoutchouc naturel de champ est un latex dans lequel de l'ammoniac a été ajouté pour éviter une coagulation précoce et le latex de caoutchouc naturel concentré correspond à un latex de champ qui a subi un traitement correspondant à un lavage suivi d'une nouvelle concentration. Les différentes catégories de latex de caoutchouc naturel concentrés sont répertoriées notamment selon la norme ASTM D 1076-06. Parmi ces latex de caoutchouc naturel concentrés, on distingue notamment des latex de caoutchouc naturel concentrés de qualité dite : « HA » (high ammonia) et de qualité dite « LA » ; on utilisera avantageusement pour l'invention des latex de caoutchouc naturel concentrés de qualité HA.

Le latex peut être utilisé directement ou être préalablement dilué dans de l'eau pour faciliter sa mise en oeuvre.

Par élastomères diéniques synthétiques susceptible d'être utilisé conformément à l'invention, on entend plus particulièrement par élastomère diénique:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 5 C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

En résumé, le ou les élastomères diéniques synthétiques selon l'invention sont choisis préférentiellement dans le groupe des élastomères diéniques fortement insaturés constitué par les polybutadiènes (en abrégé "BR"), les polyisoprènes (IR) de synthèse, les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Ainsi à titre de latex d'élastomère synthétique, le latex peut notamment consister en un élastomère diénique synthétique déjà disponible sous forme d'émulsion (par exemple un copolymère de butadiène et de styrène, SBR, préparé en émulsion), ou en un élastomère diénique synthétique initialement en solution (par exemple un SBR préparé en solution) qui est émulsifié dans un mélange de solvant organique et d'eau, généralement au moyen d'un agent tensioactif.

Convient particulièrement à l'invention un latex de SBR, notamment un SBR préparé en émulsion ("ESBR") ou un SBR préparé en solution ("SSBR"), et plus particulièrement un SBR préparé en émulsion.

Il existe deux grands types de procédés de copolymérisation en émulsion du styrène et de butadiène, l'un d'entre eux, ou procédé à chaud (mis en oeuvre à une température proche de 50° C), étant adapté pour la préparation de SBR très ramifiés alors que l'autre, ou procédé à froid (mis en oeuvre à une température pouvant aller de 15° C à 40° C), permet d'obtenir des SBR plus linéaires.

Pour une description détaillée de l'efficacité de plusieurs émulsifiants utilisables dans ledit procédé à chaud (en fonction des taux desdits émulsifiants), on pourra par exemple se reporter aux deux articles de C. W. Carr, 1. M. Kolthoff, E. J. Meehan, University of Minesota, Minneapolis, Minesota qui ont paru dans Journal of Polymer Science de 1950, Vol. V, n°2, pp. 201-206, et de 1951, Vol. VI, n° 1, pp. 73-81.

Concernant des exemples comparatifs de mise en oeuvre dudit procédé à froid, on pourra par exemple se reporter à l'article ½ Industrial and Engineering Chemistry, 1948, Vol. 40, n° 5, pp. 932-937, E. J. Vandenberg, G. E. Hulse, Hercules Powder Company, Wilmington, Delaware + et a l'article ½ Industrial and Engineering Chemistry, 1954, Vol. 46, n° 5, pp. 1065-1073, J. R. Miller, H. E. Diem, B. F. Goodrich Chemical Co. , Akron, Ohio +.

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

On notera que l'on peut envisager d'utiliser un ou plusieurs latex de caoutchouc naturel en coupage, un ou plusieurs latex de caoutchouc synthétique en coupage ou un coupage un ou plusieurs latex de caoutchouc naturel avec un ou plusieurs latex de caoutchouc synthétique.

Selon un mode de réalisation préféré de l'invention, le procédé met en oeuvre une dispersion aqueuse de caoutchouc naturel, et plus particulièrement un latex concentré de caoutchouc naturel, et notamment un latex de caoutchouc naturel concentré de qualité dite: « HA » (high ammonia) et de qualité dite « LA ». Plus particulièrement, le latex de caoutchouc naturel concentré de qualité dite : « HA » (high ammonia) est utilisé.

La concentration en caoutchouc naturel dans la dispersion aqueuse (A) est de 10 à 65% en poids, de préférence de 30 à 65% en poids, et notamment de 40 à 65% en poids par rapport au poids total de la dispersion.

### Dispersion aqueuse stable d'une ou plusieurs charges (B)

Par dispersion aqueuse stable, comme définit ci-dessus pour la dispersion aqueuse (C), on attend une dispersion dans laquelle les constituants de cette dispersion, c'est-à-dire les charges ne coagulent pas, ne floculent pas, ne comportent pas d'agglomérat, et ne sédimentent pas, du moins au niveau macroscopique, c'est-à-dire que son état n'évolue pas dans un temps déterminé à température ambiante sous une pression atmosphérique.

On peut utiliser tout type de charge renforçante connue pour ses capacités à renforcer une composition de caoutchouc utilisable pour la fabrication de pneumatiques, sous réserve que ces charges ne coagulant pas spontanément avec l'élastomère diénique.

Les charges selon l'invention peuvent être choisies parmi une charge organique renforçante, une charge inorganique renforçante, telle que de la silice, une charge hybride organique/inorganique, une charge à base de polymère et leur mélanges, ces charges étant toutes hydrophiles.

### Dispersion aqueuse d'une ou plusieurs charges inorganiques renforçantes

Par "charge inorganique renforçante" selon l'invention, doit être entendu dans la présente demande, par définition, toute charge inorganique ou minérale (quelles que soient sa couleur et son origine (naturelle ou de synthèse)), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique. Dans le cadre de la présente invention, une telle charge se caractérise par son caractère hydrophile, c'est-à-dire généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges inorganiques renforçantes, en particulier de charges siliceuses et/ou alumineuses telles que décrites ci-après.

En tant que silice peut être mentionnée la silice précipitée, pyrogénée ou colloïdale. En tant que charge inorganique, peuvent être citées: la silice (SiO₂), l'alumine (Al₂O₃) ; l'alumine monohydrate (Al₂O₃ H₂O) ; l'hydroxyde d'aluminium [Al(OH)3] ; le carbonate d'aluminium [Al₂(CO₃)₃] ; l'hydroxyde de magnésium [Mg(OH)₂], l'oxyde de magnésium (MgO), le carbonate de magnésium (MgCO₃), le talc (₃MgO₄SiO₂ H₂O), l'attapulgite (5MgO 8SiO₂ 9H₂O), le dioxyde de titane (TiO₂), le noir de titane (TiO₂ₙ₋₁), l'oxyde de calcium (CaO), l'hydroxyde de calcium [Ca(OH)2], l'oxyde d'aluminium et de magnésium (MgO Al₂O₃), l'argile (Al₂O₃ 2SiO₂), le kaolin (Al₂O₃ 2SiO₂ 2H₂O), la pyrophyllite (Al₂O₃ 4SiO₂ H₂O), la bentonite (Al₂O₃ 4SiO₂ 2H₂O), le silicate d'aluminium (Al₂SiO₅, Al₄ 3SiO₄ 5H₂O), le silicate de magnésium (Mg₂SiO₄, MgSiO₃), le silicate de calcium (Ca₂SiO₄), le silicate d'aluminium et de calcium (Al₂O₃ CaO 2SiO₂), le silicate de magnésium et de calcium (CaMgSiO₄), le carbonate de calcium (CaCO₃), l'oxyde de zirconium (ZrO₂), l'hydroxyde de zirconium [ZrO(OH)₂ nH₂O], le carbonate de zirconium [Zr(CO₃)₂], et les aluminosilicates cristallins contenant des atomes d'hydrogène compensant des charges, des métaux alcalins, des métaux alcalino-terreux , tel que les zéolithes, et leur mélange.

Comme charges inorganiques renforçantes conviennent notamment des charges minérales du type silicieuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées, on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Selon un autre mode de réalisation de l'invention, l'élastomère diénique mis en oeuvre est du caoutchouc naturel et la charge inorganique utilisée est de la silice.

Contrairement au noir de carbone, la charge mise en oeuvre selon l'invention ne coagule pas spontanément avec le caoutchouc naturel. Dans le cas particulier de la silice, les agrégats de silice sont typiquement hydrophiles et ont davantage d'affinité avec l'eau qu'avec les particules d'élastomère elles-mêmes.

Différentes solutions ont été proposées pour permettre néanmoins d'obtenir la coagulation et une bonne dispersion de la charge dans la matrice élastomérique en phase liquide.

Ainsi, il est nécessaire de modifier en surface la charge selon l'invention, afin de créer l'affinité nécessaire entre les particules de charge et les particules d'élastomère. La capacité de la charge à coaguler avec l'élastomère provient de ses propriétés de surface.

Or, il a été observé de manière surprenante que la présence d'une charge partiellement hydrophobée au sein de la dispersion aqueuse (B) permet la coagulation de la dispersion aqueuse (C). De plus, il a été observé, à apport d'énergie mécanique constant apportée à la dispersion aqueuse (C), que la durée de la phase d'homogénéisation de la dispersion (C) est fonction du taux d'hydrophobation de la charge.

Pour rendre la charge selon l'invention hydrophobe, il est greffé sur la particule d'un ou plusieurs agents hydrophobants de formule générale (I) suivante :

Eₙ-F (Formule I)

dans laquelle
- n est un entier égal à 1 ou 2,
- lorsque n vaut 1, alors F est un groupe monovalent,
- lorsque n vaut 2, alors F est un groupe divalent,
- E représente un groupe fonctionnel qui est capable de se lier physiquement et/ou chimiquement à la charge et comportant dans sa structure au moins une chaîne alkyle ou alkylène comportant de 1 à 18 atomes de carbone conférant au groupe E des propriétés hydrophobantes ;
- F représente un groupe pouvant se lier ou non physiquement et/ou chimiquement à l'élastomère diénique.

Avantageusement, l'agent hydrophobant est de formule (II) suivante :

[G₍₃₋ₘ₎(L-K)ₘSi-L-]ₙ-F (II)

avec
lorsque n vaut 1, alors F désigne le groupe K défini ci-dessous, et m varie de 0 à 2, et
lorsque n vaut 2, alors F désigne un groupe amino, un groupe polysulfure (Sx), un groupe époxy, et m varie de 0 à 2,
et pour laquelle
les groupements G sont choisis, indépendamment les uns des autres, parmi un atome d'hydrogène, un groupe hydrocarboné en C₁-C₁₈ choisi parmi les groupes alkyles linéaires, ramifiés ou cycliques, les groupes aralkyles, les groupes alkylaryles et les groupes aryles, tel qu'un phényle, un benzyle, un cyclopentyle, un cyclohexyle, un groupe alkoxy (R₁O)-, dans lequel R₁ représente un radical alkyle saturé en C₁-C₈, tel que par exemple les groupes méthyle, éthyle, isopropyle, de préférence au moins un groupe méthyle et éthyle, un atome d'halogène, tel que le fluor, le chlore, le brome et l'iode et un groupement hydroxy,
à la condition qu'au moins un groupement G soit choisi parmi un groupement alkoxy, un atome de chlore, ou un groupement hydroxy,
L désigne un radical alkylène saturé ou insaturé, linéaire, ramifiée ou cyclique en C₁-C₁₈, et de préférence 1 à 8 atomes de carbone, tel que par exemple les groupes méthylène, éthylène, isopropylène, n-butylène, octadécylène, phénylène, cyclopentylène et cyclohexylène, et comportant éventuellement un atome d'oxygène,
K désigne un atome d'hydrogène, un atome d'halogène, tel que le fluor, le chlore, le brome et l'iode, un groupe fonctionnel choisi parmi un groupe amino, un groupe polyamino alkyle, un groupe mercapto, un groupe époxy, un groupe hydroxy, un groupe vinyle, un groupe acryloxy, un groupe méthacryloxy, un groupe -SCN, un groupe R(CO)S- avec R étant un groupe alkyle en C₁-C₁₈.

De préférence, m=0.

Ainsi, selon un premier mode de réalisation particulier de l'invention, l'agent hydrophobant est de formule (III) suivante :

G₃Si-L-K (III)

avec G, L et K étant tels que définis ci-dessus.

Selon un deuxième mode de réalisation particulier de l'invention, l'agent hydrophobant est de formule (IV) suivante :

[G₃Si-L-]₂-F (IV)

avec G, L et F étant tels que définis ci-dessus.

De préférence, l'agent hydrophobant est choisi parmi le chlorotriméthylsilane, chlorotriéthylsilane, chlorotripropylsilane, bromotriméthylsilane, bromotriéthylsilane, bromotripropylsilane, fluorotriméthylsilane, méthoxy triméthylsilane, méthoxytriéthylsilane, méthoxytripropylsilane, chlorotriméthylsilane, dichlorodiméthylsilane, trichlorométhylsilane, bromotriméthylsilane, dibromodiméthylsilane, tribromométhylsilane, méthoxytriméthylsilane, diméthoxydiméthyl silane, triméthoxyméthylsilane, tétraméthoxysilane, triméthoxypropylsilane, triméthoxyoctylsilane, triméthoxy hexadécylsilane, diméthoxydipropylsilane, triéthoxy m éthyl silane, triéthoxypropylsilane, triéthoxyoctylsilane, le diéthoxydiméthylsilane, l'octényldiméthylchlorosilane, octodécyltrichlorosilane, (gamma-aminopropyl)-triméthoxysilane, (gamma-aminopropyl)-triéthoxysilane, (gamma-hydroxypropyl) tripropoxysilane, (gamma-mercaptopropyl)-triéthoxysilane, (gamma-aminopropyl)-diméthyléthoxysilane, (gamma-aminopropyl)-dihydroxy méthoxysilane, (glycidylpropyl)-triméthoxysilane, [(N-aminoéthyl) gamma-aminopropyl]triéthoxysilane, (gamma-méthacryloxy-propyl) triéthoxysilane, (gamma-méthacryloxy-propyl)triméthoxysilane, (béta-mercaptoéthyl)-triéthoxysilane, [gamma-(N-aminoéthyl)propyl] triméthoxysilane, N-méthylaminopropyltriméthoxysilane, (gamma-thiocyanatopropyl)-triéthoxysilane, bis-(3-triéthoxythiopropyl) silanetétrasulfure, vinyltriéthoxysilane, vinylphénylméthylsilane, vinyl diméthylméthoxysilane, divinyldiméthoxysilane, divinyléthyl diméthoxysilane, diméthylvinylchlorosilane et leur mélange.

Parmi les composés alkoxysilane-polysulfure connus, doit être particulièrement cité le tétrasulfure de bis 3-triéthoxysilylpropyle (en abrégé "TESPT"), de formule [(C₂H₅O)₃Si(CH₂)₃S₂]₂, commercialisé notamment par la société Degussa sous la dénomination "Si69", sous la forme d'un mélange commercial de polysulfures Sₓ avec une valeur moyenne pour x qui est proche de 4.

Selon un mode de réalisation préféré de l'invention, l'agent hydrophobant est choisi parmi l'octényldiméthylchlorosilane, le tétrasulfure de bis 3-triéthoxysilylpropyle et leur mélange.

Selon l'invention, l'un des groupes alkoxy, ou l'atome d'halogène porté par le silane réagira avec un groupe silanol présent à la surface de la silice, lorsque la charge selon l'invention est de la silice.

De préférence, l'agent hydrophobant une fois fixé sur la charge comporte au plus 30 atomes de carbone, et plus particulièrement de 1 à 25 atomes de carbone.

Par charge partiellement hydrophobée, on entend au sens de la présente invention une charge qui porte suffisamment d'agents hydrophobants pour permettre la coagulation de la charge avec l'élastomère, tout en évitant que la charge n'en porte de trop, ce qui conduirai à une charge non dispersible dans l'eau.

De préférence, la charge partiellement hydrophobée se caractérise par un taux d'hydrophobation compris entre 0 et 1,10 atomes de carbone portés par l'agent hydrophobant une fois fixé sur la charge par nm² de surface de charge.

Préférentiellement, le taux d'hydrophobation est compris entre 0 et 0,73 atomes de carbone/nm² de surface, et plus particulièrement de 0,18 à 0,30 atomes de carbone/nm² de surface.

La surface spécifique BET d'une charge est généralement mésurée, et de manière connue en soi selon la méthode de BRUNAU-EMMETT-TELLER décrite dans « The Journal of the American Chemical Society », Vol. 60, page 309, Fev. 1938, correspondant à la norme ISO 5794/1.

### Préparation de la dispersion aqueuse de charge (B)

La ou les charges selon l'invention sont ensuite dispersées dans de l'eau, de préférence de sorte à obtenir une dispersion dont la viscosité est suffisante pour être aisément manipulable.

Avantageusement, la dispersion est sonifiée afin de permettre l'obtention d'une stabilité des agrégats dans l'eau, ce qui permet d'améliorer la dispersibilité de la dispersion aqueuse de charge dans le mélange-maître ensuite réalisé.

Dans la dispersion aqueuse (B) comprenant les charges, la concentration en charges est préférentiellement comprise entre 0,1 à 20% en poids, préférentiellement entre 1 à 15% en poids par rapport à l'eau présente dans la dispersion aqueuse de charge (B).

### Mise en contact des deux dispersions et phase d'homogénéisation

Le latex de l'élastomère diénique (A) et la dispersion stable de charge (B) sont mis en contact. Le slurry de charge est versé lentement dans le latex d'élastomère, ou inversement, sous une agitation de préférence lente de manière à assurer une bonne homogénéisation du milieu. Le mélange des dispersions (A) et (B) de manière simultanée l'une dans l'autre avec un débit contrôlé est également envisageable.

Comme exposé ci-dessus, le taux d'hydrophobation de la silice constitue un paramètre, qui oriente la cinétique de la coagulation du milieu, et ce en gardant constant l'apport d'énergie mécanique appliqué au moment de la mise en contact des deux dispersions.

Le procédé selon l'invention permet ainsi de contrôler, voir de commander la coagulation du milieu. Le contrôle de la durée de la phase d'homogénéisation du latex et du slurry permet d'agir directement sur l'homogénéité du milieu, et du mélange-maître final.

Plus la phase d'homogénéisation sera efficace, plus la répartition des charges dans le coagulum sera homogène.

### Phase de coagulation

Une fois l'homogénéisation effectuée, vient la phase de coagulation.

La coagulation peut être provoquée en apportant au système un apport d'énergie mécanique suffisant. Par exemple, une importante augmentation de la vitesse de cisaillement peut être appliquée au milieu. Il est également possible de comprimer le système. Cet apport d'énergie mécanique va déstabiliser de manière simultanée tout le volume et provoquer la coagulation de la dispersion aqueuse (C).

Une autre possibilité est de laisser la dispersion aqueuse (C) sous un apport d'énergie mécanique constant, c'est-à-dire identique à l'apport effectué lors de la phase d'homogénéisation. Par exemple, en conservant un taux de cisaillement constant pour ces deux phases : homogénéisation et coagulation.

Lorsque l'énergie mécanique apportée au système s'applique sous la forme d'action du cisaillement, des mélangeurs statiques ou bien des mélangeurs dynamiques, tels que des agitateurs à pale peuvent être utilisés.

Il est possible d'utiliser tout type d'appareil permettant un mélange efficace de deux produits en phase liquide, ainsi on pourra utiliser un mélangeur statique tel que ceux commercialisés par les sociétés Noritake Co., Limited, TAH aux USA, KOFLO aux USA, ou TOKUSHU KIKA KOGYO Co., Ltd. ou un mélangeur réalisant un haut cisaillement tel que des mélangeurs commercialisés par TOKUSHU KIKA KOGYO Co., Ltd., ou par la société PUC en Allemagne, par la société CAVITRON en Allemagne ou par la société SILVERSON au Royaume Uni.

Lors de la phase de coagulation de ces deux dispersions, un coagulum d'élastomère et de charge se forme soit sous forme d'un seul élément solide dans la solution, soit sous forme de plusieurs éléments solides séparés.

Le volume de dispersion aqueuse de la charge (B) dépend du taux de charge visé pour le mélange-maître à réaliser, du volume du latex d'élastomère diénique (A) et de leur concentration respective.

Ainsi, le volume sera adapté en conséquence. Avantageusement, le taux de charge visé pour le mélange-maître est compris entre 10 et 150 pce, de préférence entre 10 à 100 pce et plus préférentiellement entre 15 et 90 pce, encore plus préférentiellement entre 15 et 70 pce.

De préférence, le procédé selon l'invention ne comporte pas l'ajout d'agent de coagulation. C'est l'apport de l'énergie mécanique au système, qui provoque la coagulation.

Ainsi, la quantité d'énergie mécanique apportée au système et le taux d'hydrophobation de la silice sont deux paramètres permettant le contrôle des phases d'homogénéisation et de coagulation.

Selon un autre mode de réalisation, il est possible d'ajouter à la dispersion (C) un ou plusieurs agents de coagulation de manière à améliorer le rendement de l'étape de coagulation. Dans cette éventualité, l'agent de coagulation n'est pas le facteur responsable du déclenchement de la coagulation.

### Récupération du solide formé

Le ou les solides sont récupérés par exemple par filtration ou par centrifugation. En effet, l'opération de filtrage qui peut être réalisée à l'aide d'un tamis de filtration, peut s'avérer inadaptée lorsque le coagulum se présente sous forme de nombreux et petits éléments solides. Dans un tel cas, on réalise de préférence une opération de centrifugation supplémentaire.

A l'issue de cette étape de récupération, le coagulum obtenu est séché, par exemple à l'étuve.

Le procédé selon l'invention peut s'effectuer de manière continue, aussi bien que de manière discontinue.

### Additifs

Le latex d'élastomère diénique (A) et la dispersion aqueuse de charge (B) conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation exclusion faite bien entendu des activateurs à base de zinc (ou dans le respect des 0,5 pce maximum de zinc dans la composition, et de préférence moins de 0,3 pce).

De préférence, ces dispersions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

Les additifs décrits précédemment pourraient également être incorporés au mélange maître après la formation du coagulum.

Il est également possible d'ajouter au milieu, après coagulation des agents de couplage, des activateurs de couplage, des agents de recouvrement de la charge inorganique renforçante ou plus généralement des agents d'aide à la mise en oeuvre susceptibles de manière connue, grâce à une amélioration de la dispersion de la charge inorganique ou organique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des α,ω-dihydroxy-polyorganosiloxanes (notamment des α,ω-dihydroxy-polydiméthyl siloxanes), des acides gras comme par exemple l'acide stéarique, et des charges renforçantes différentes de celles décrites ci-dessus, tel que le noir de carbone.

L'invention porte également sur un mélange-maître d'élastomère diénique et de charge préparé selon le procédé décrit ci-dessus.

L'invention a aussi pour objet une composition de caoutchouc à base d'au moins un mélange-maître d'élastomère diénique et de charge préparé selon le procédé décrit ci-dessus.

L'invention concerne également un article fini ou semi-fini comportant une composition telle que définie ci-dessus.

L'invention concerne encore une bande de roulement de pneumatique comportant une composition telle que définie ci-dessus.

L'invention a enfin pour objet un pneumatique ou produit semi-fini comportant au moins une composition de caoutchouc telle que définie ci-dessus.

Les exemples suivants servent à illustrer l'invention sans toutefois présenter un caractère limitatif.

### EXEMPLES DE REALISATION DE L'INVENTION

### matériel utilisé

- générateur d'ultrason Bricel de modèle VCX500 (réf. Fisher W75043) de puissance 500W, utilisé à 60 % de sa puissance maximale,
- son de sonication standard ayant un diamètre de 13mm, adapté pour la sonication de volumes compris entre 10 et 250nl (réf. Fisher 75482),
- un agitateur magnétique plus un baron aimanté,
- verrerie : becher de taille 15ml (réf. VWRN 15ml, 213-3916) 500ml (réf. VWR 50ml 212-9301),
- réactif : latex de caoutchouc naturel high ammonia à 60 % en poids de caoutchouc naturel de Trang latex CO, LTD, Thailande,
- poudre de silice fournie par Michelin broyée avec un mortier, silice Vozeosil (1165mp de rhodia),
- eau distillée.

### Préparation de la silice partiellement hydrophobée

La silice est broyée en une poudre fine à l'aide d'un mortier et d'un pilon. L'hydrophobicité de la silice est ajustée par silanisation de sa surface avec de l'octényldiméthylchlorosilane(ODCS).

La silice partiellement hydrophobée est préparée en faisant réagir 5g de silice hydrophile avec différentes quantités de ODCS en présence de 50g de toluène (voir le tableau des compositions 1 à 6 ci-dessous).

Les quantités nécessaires de ODCS sont dissoutes dans du toluène. Le milieu est placé sous agitation à l'aide d'un agitateur magnétique. La poudre de silice broyée est ajoutée au milieu et la dispersion est laissée sous agitation pendant deux minutes. La composition est placée dans une boîte Petri (de diamètre 18,5cm) et est placée à une température de 70°C pendant une heure de manière à permettre l'évaporation du toluène. La poudre obtenue est dispersée dans de l'eau distillée après deux minutes de sonication.

| | 1 | 2 | 3 | 4 | 5 | 6 |
|---|---|---|---|---|---|---|
| Silice en g | 5 | 5 | 5 | 5 | 5 | 5 |
| ODCS en g | 0,00 | 0,05 | 0,06 | 0,10 | 0,30 | 2,18 |
| toluène | 50g | 50g | 50g | 50g | 50g | 50g |

### 1. Impact de l'apport d'énergie mécanique sur la cinétique de coagulation à taux d'hydrophobation de la silice constant

### Mélange-maîtres préparés :

Un mélange-maître est préparé selon un procédé conforme à l'invention et ce de manière suivante.

### Préparation de la dispersion aqueuse A de latex de caoutchouc naturel

Le latex de caoutchouc naturel est pesé dans un becher en verre, un barreau aimanté y est ajouté, il est ensuite dilué dans de l'eau distillée jusqu'à une concentration de 60 % en poids de caoutchouc naturel.

### Préparation de la dispersion aqueuse de charge B

2,32g de silice partiellement hydrophobée préparée selon la composition 4 décrite ci-dessus sont dispersés dans 20ml d'eau. Puis l'ensemble est homogénéisé à l'aide d'une sonde ultrason pendant deux minutes. La silice agglomérée sur la sonde à la fin des deux minutes est incorporée au mélange à l'aide d'une spatule.

### Préparation du mélange-maître

3,3g de dispersion aqueuse (B) sont introduits dans un becher de 15 ml avec un barreau aimanté. 3,3g de la dispersion aqueuse (A) y sont ajoutés.

### Evaluation du temps caractéristique τ

La dispersion aqueuse (C) formée est homogénéisée à différentes vitesses de rotation du barreau (100 et 200 rpm).

La coagulation macroscopique est observée, lorsque le becher se met en mouvement avec le barreau aimanté, signe d'une forte augmentation de la viscosité du à la coagulation,

| Vitesse d'agitation (rpm) | Temps avant coagulation (s) |
|---|---|
| 100 | 45 |
| 200 | 21 |

### Conclusion

Ces résultats montrent que l'apport d'un cisaillement plus élevé diminue la durée de la phase d'homogénéisation à taux de d'hydrophobation constant.

### 2. Impact de l'hydrophobation de la silice sur la cinétique de coagulation à apport d'énergie mécanique constant

### Mélange-maîtres préparés :

Les mélange-maîtres sont préparés selon un procédé conforme à l'invention et ce de manière suivante.

### Préparation de la dispersion aqueuse A de latex de caoutchouc naturel

Le latex de caoutchouc naturel est pesé dans un becher en verre, un barreau aimanté y est ajouté, il est ensuite dilué dans de l'eau distillée jusqu'à une concentration de 60 % en poids de caoutchouc naturel.

### Préparation de la dispersion aqueuse de charge B

2,32g de la silice partiellement hydrophobée préparée selon les compositions 1 à 3, 5 et 6 décrites ci-dessus sont dispersés dans 20ml d'eau. Puis l'ensemble est homogénéisé à l'aide d'une sonde ultrason pendant deux minutes. La silice agglomérée sur la sonde à la fin des deux minutes est incorporée au mélange à l'aide d'une spatule.

### Préparation du mélange-maître

3,3g de chacune des dispersions aqueuses (B) sont introduits dans un becher de 15 ml puis 3,3g de la dispersion aqueuse (A) y sont ajoutés. Le mélange est mélangé en utilisant l'agitateur magnétique à une vitesse de 700 rpm.

### Evaluation du temps caractéristique τ

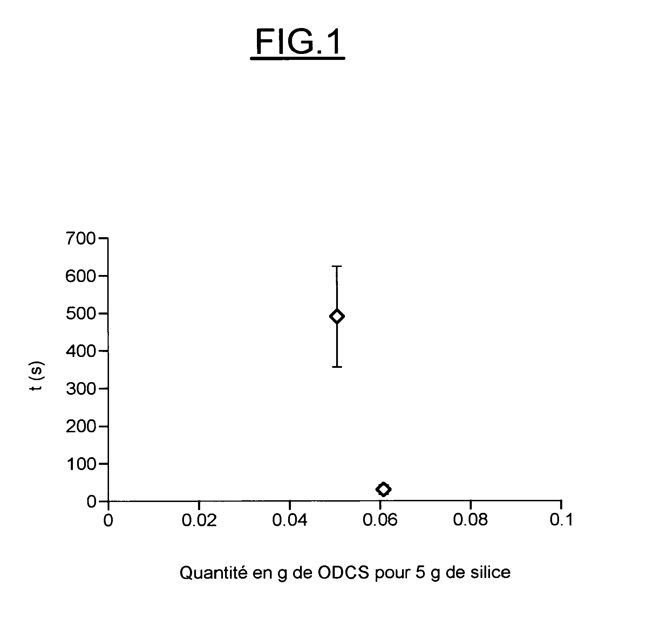

La figure 1 montre le temps observé avant la déstabilisation macroscopique de la dispersion aqueuse (C) pour les différentes quantités d'agents hydrophobants utilisés, ici le ODCS.

| | 1 | 2 | 3 | 5 | 6 |
|---|---|---|---|---|---|
| Nb atome C/nm² | 0,00 | 0,18 | 0,22 | 1,10 | 8,04 |
| Temps avant coagulation (s) | Pas de coagulation | 500s | <50s | Charge non dispersible dans l'eau | Charge non dispersible dans l'eau |

La figure 1 montre que plus le rapport du nombre de carbone porté portés par l'agent hydrophobant une fois fixé sur la la silice sur la surface de la silice est grand, plus la durée de la phase d'homogénéisation est courte.

Ainsi, la durée de la phase d'homogénéisation précédant la phase de coagulation peut être contrôlée par le taux d'hydrophobation de la charge, c'est-à-dire le rapport du nombre d'atome de carbone fixé à la surface de la charge par l'agent hydrophobant rapporté à la surface de la charge et par l'énergie mécanique apportée à la dispersion (C)

Le début de la phase de coagulation peut être contrôlée par un apport d'énergie mécanique supplémentaire.

## Revendications

1. Procédé de préparation d'un mélange-maître en phase liquide à base d'un ou plusieurs élastomères diéniques et d'une ou plusieurs charges ne coagulant pas spontanément avec ledit latex, comprenant les étapes successives suivantes :
- réalisation d'une dispersion aqueuse stable et homogène (C), par mélange
d'un ou plusieurs latex d'élastomère diénique (A) avec
une ou plusieurs dispersions aqueuses stables (B) d'une ou plusieurs charges ne coagulant pas spontanément avec ledit latex, et qui sont partiellement hydrophobées,
- homogénéisation de la dispersion aqueuse (C),
- coagulation au sein de la dispersion aqueuse (C) du latex d'élastomère diénique avec les charges ne coagulant pas spontanément avec ledit latex par apport d'énergie mécanique,
- récupération du coagulum, puis
- séchage du coagulum récupéré pour obtenir le mélange-maître.

2. Procédé selon la revendication 1, **caractérisé en ce que** la phase de récupération du coagulum est réalisée par une opération de filtrage.

3. Procédé selon la revendication 1, **caractérisé en ce que** la phase de récupération du coagulum est réalisée par une opération de centrifugation.

4. Procédé selon l'une quelconque des revendications 1 à 3, **caractérisé en ce que** le latex d'élastomère diénique est un latex de caoutchouc naturel.

5. Procédé selon la revendication 4, **caractérisé en ce que** le latex d'élastomère diénique est un latex concentré de caoutchouc naturel.

6. Procédé selon l'une quelconque des revendications précédentes, **caractérisé en ce que** la charge est choisie parmi la silice (SiO₂), l'alumine (Al₂O₃) ; l'alumine monohydrate (Al₂O₃ H₂O) ; l'hydroxyde d'aluminium [Al(OH)₃) ; le carbonate d'aluminium [Al₂(CO₃)₃] ; l'hydroxyde de magnésium [Mg(OH)₂], l'oxyde de magnésium (MgO), le carbonate de magnésium (MgCO₃), le talc (3MgO 4SiO₂ H₂O), l'attapulgite (5MgO 8SiO₂ 9H₂O), le dioxyde de titane (TiO₂), le noir de titane (TiO₂ₙ₋₁), l'oxyde de calcium (CaO), l'hydroxyde de calcium [Ca(OH)₂], l'oxyde d'aluminium et de magnésium (MgO Al₂O₃), l'argile (Al₂O₃ 2SiO₂), le kaolin (Al₂O₃ 2SiO₂ 2H₂O), la pyrophyllite (Al₂O₃ 4SiO₂ H₂O), la bentonite (Al₂O₃ 4SiO₂ 2H₂O), le silicate d'aluminium (Al₂SiO₅, Al₄ 3SiO₄ 5H₂O), le silicate de magnésium (Mg₂SiO₄, MgSiO₃), le silicate de calcium (Ca₂SiO₄), le silicate d'aluminium et de calcium (Al₂O₃ CaO 2SiO₂), le silicate de magnésium et de calcium (CaMgSiO₄), le carbonate de calcium (CaCO₃), l'oxyde de zirconium (ZrO₂), l'hydroxyde de zirconium [ZrO(OH)₂ nH₂O], le carbonate de zirconium [Zr(CO₃)₂], et les aluminosilicates cristallins contenant des atomes d'hydrogène compensant des charges, des métaux alcalins, des métaux alcalino-terreux et leur mélange.

7. Procédé selon la revendication précédente, **caractérisé en ce que** la charge est de la silice (SiO₂).

8. Procédé selon l'une quelconque des revendications précédentes, **caractérisé en ce que** la charge est partiellement hydrophobée à l'aide d'un ou plusieurs agents hydrophobants de formule (I) suivante :
Eₙ-F (Formule I)
dans laquelle
- n est un entier égal à 1 ou 2,
- lorsque n vaut 1, alors F est un groupe monovalent,
- lorsque n vaut 2, alors F est un groupe divalent,
- E représente un groupe fonctionnel qui est capable de se lier physiquement et/ou chimiquement à la charge et comportant dans sa structure au moins une chaîne alkyle ou alkylène comportant de 1 à 18 atomes de carbone conférant au groupe E des propriétés hydrophobantes ;
- F représente un groupe pouvant se lier ou non physiquement et/ou chimiquement à l'élastomère diénique.

9. Procédé selon la revendication précédente, **caractérisé en ce que** l'agent hydrophobant est de formule (II) suivante :
[G₍₃₋ₘ₎(L-K)ₘSi-L-]ₙ-F (II)
avec
lorsque n vaut 1, alors F désigne le groupe K défini ci-dessous, et m varie de 0 à 2,
et
lorsque n vaut 2, alors F désigne un groupe amino, un groupe polysulfure (Sx), un groupe époxy, et m varie de 0 à 2,
et pour laquelle
les groupements G sont choisis, indépendamment les uns des autres, parmi un atome d'hydrogène, un groupe hydrocarboné en C₁-C₁₈ choisi parmi les groupes alkyles linéaires, ramifiés ou cycliques, les groupes aralkyles, les groupes alkylaryles et les groupes aryles, tel qu'un phényle, un benzyle, un cyclopentyle, un cyclohexyle, un groupe alkoxy (R₁O)-, dans lequel R₁ représente un radical alkyle saturé en C₁-C₈, tel que par exemple les groupes méthyle, éthyle, isopropyle, de préférence au moins un groupe méthyle et éthyle, un atome d'halogène, tel que le fluor, le chlore, le brome et l'iode et un groupement hydroxy,
à la condition qu'au moins un groupement G soit choisi parmi un groupement alkoxy, un atome de chlore, ou un groupement hydroxy,
L désigne un radical alkylène saturé ou insaturé, linéaire, ramifiée ou cyclique en C₁-C₁₈, et de préférence 1 à 8 atomes de carbone, tel que par exemple les groupes méthylène, éthylène, isopropylène, n-butylène, octadécylène, phénylène, cyclopentylène et cyclohexylène, et comportant éventuellement un atome d'oxygène,
K désigne un atome d'hydrogène, un atome d'halogène, tel que le fluor, le chlore, le brome et l'iode, un groupe fonctionnel choisi parmi un groupe amino, un groupe polyamino alkyle, un groupe mercapto, un groupe époxy, un groupe hydroxy, un groupe vinyle, un groupe acryloxy, un groupe méthacryloxy, un groupe -SCN, un groupe R(CO)S-avec R étant un groupe alkyle en C₁-C₁₈.

10. Procédé selon la revendication précédente, **caractérisé en ce que** l'agent hydrophobant est choisi parmi le chlorotriméthylsilane, chlorotriéthylsilane, chlorotripropylsilane, bromotriméthylsilane, bromotriéthylsilane, bromotripropylsilane, fluorotriméthylsilane, méthoxy triméthylsilane, méthoxytriéthylsilane, méthoxytripropylsilane, chlorotriméthylsilane, dichloro-diméthylsilane, trichlorométhylsilane, bromotriméthylsilane, dibromodiméthylsilane, tribromométhylsilane, méthoxytriméthylsilane, diméthoxydiméthylsilane, triméthoxyméthylsilane, tétraméthoxy silane, triméthoxypropylsilane, triméthoxyoctylsilane, triméthoxy hexadécylsilane, diméthoxydipropylsilane, triéthoxyméthylsilane, triéthoxypropylsilane, triéthoxyoctylsilane, diéthoxy diméthylsilane, octényldiméthylchlorosilane, octodécyltrichlorosilane, (gamma-aminopropyl) triméthoxysilane, (gamma-aminopropyl) triéthoxysilane, (gamma-hydroxypropyl) tripropoxysilane, (gamma-mercaptopropyl) triéthoxysilane, (gamma-aminopropyl) diméthyléthoxysilane,(gamma-aminopropyl) dihydroxyméthoxy-silane, (glycidylpropyl (triméthoxysilane, [(N-aminoéthyl)gamma-aminopropyl]triéthoxysilane, (gamma-méthacryloxy-propyl) triéthoxysilane, (gamma-méthacryoxy-propyl)triméthoxysilane, (béta-mercaptoéthyl) triéthoxysilane, [gamma-(N-aminoéthyl)propyl] triméthoxysilane, N-méthylaminopropyltriméthoxysilane, (gamma-thiocyanatopropyl) triéthoxysilane, bis-(3-triéthoxythiopropyl) silanetétrasulfure, vinyltriéthoxysilane, vinylphénylméthylsilane, vinyl diméthylméthoxysilane, divinyldiméthoxysilane, divinyléthyl diméthoxysilane, diméthylvinylchlorosilane, le tétrasulfure de bis 3-triéthoxysilylpropyle et leur mélange.

11. Procédé selon l'une quelconque des revendications 8 à 10, **caractérisé en ce que** l'agent hydrophobant est choisi parmi l'octényldiméthylchlorosilane, le tétrasulfure de bis 3-triéthoxysilylpropyle et leur mélange.

12. Procédé selon l'une quelconque des revendications 8 à 11, **caractérisé en ce que** la charge partiellement hydrophobée se **caractérise par** un taux d'hydrophobation compris entre 0 et 1,10 atomes de carbone portés par l'agent hydrophobant une fois fixé sur la charge par nm² de surface de charge.

13. Procédé selon l'une quelconque des revendications précédentes, **caractérisé en ce que** le procédé n'utilise pas d'agent de coagulation.

14. Composition de caoutchouc à base d'au moins un mélange-maître d'élastomère diénique et de charge préparé selon l'une quelconque des revendications 1 à 13.

15. Bande de roulement de pneumatique comportant une composition selon la revendication 14.

16. Pneumatique ou produit semi-fini comportant au moins une composition de caoutchouc selon la revendication 14.

## Patentansprüche

1. Verfahren zur Herstellung eines Masterbatch in flüssiger Phase auf Basis eines oder mehrerer Dienelastomere und eines oder mehrerer Füllstoffe, die nicht spontan mit dem Latex koagulieren, umfassend die folgenden aufeinanderfolgenden Schritte:
- Herstellen einer stabilen und homogenen wässrigen Dispersion (C) durch Mischen eines oder mehrerer Dienelastomerlatices (A) mit
einer oder mehreren stabilen wässrigen Dispersionen (B) eines oder mehrerer Füllstoffe, die nicht spontan mit dem Latex koagulieren und teilweise hydrophobiert sind,
- Homogenisieren der wässrigen Dispersion (C),
- Koagulieren des Dienelastomerlatex mit den Füllstoffen, die nicht spontan mit dem Latex koagulieren, in der wässrigen Dispersion (C) durch Eintrag von mechanischer Energie,
- Gewinnen des Koagulats, dann
- Trocknen des gewonnenen Koagulats zum Erhalt des Masterbatch.

2. Verfahren nach Anspruch 1, **dadurch gekennzeichnet, dass** die Phase der Gewinnung des Koagulats durch einen Filtrationsarbeitsgang durchgeführt wird.

3. Verfahren nach Anspruch 1, **dadurch gekennzeichnet, dass** die Phase der Gewinnung des Koagulats durch einen Zentrifugationsarbeitsgang durchgeführt wird.

4. Verfahren nach einem der Ansprüche 1 bis 3, **dadurch gekennzeichnet, dass** es sich bei dem Dienelastomerlatex um einen Naturkautschuklatex handelt.

5. Verfahren nach Anspruch 4, **dadurch gekennzeichnet, dass** es sich bei dem Dienelastomerlatex um einen konzentrierten Naturkautschuklatex handelt.

6. Verfahren nach einem der vorhergehenden Ansprüche, **dadurch gekennzeichnet, dass** der Füllstoff aus Siliciumdioxid (SiO₂), Aluminiumoxid (Al₂O₃), Aluminiumoxidmonohydrat (Al₂O₃ H₂O), Aluminiumhydroxid [Al(OH)₃], Aluminiumcarbonat [Al₂(CO₃)₃], Magnesiumhydroxid [Mg(OH)₂], Magnesiumoxid (MgO), Magnesiumcarbonat (MgCO₃), Talk (3MgO 4SiO₂ H₂O), Attapulgit (5MgO 8SiO₂ 9H₂O), Titaniumdioxid (TiO₂), Titanschwarz (TiO₂ₙ₋₁), Calciumoxid (CaO), Calciumhydroxid [Ca(OH)₂], Aluminiummagnesiumoxid (MgO Al₂O₃), Ton (Al₂O₃ 2SiO₂), Kaolin (Al₂O₃ 2SiO₂ 2H₂O), Pyrophyllit (Al₂O₃ 4SiO₂ H₂O), Bentonit (Al₂O₃ 4SiO₂ 2H₂O), Aluminiumsilicat (Al₂SiO₅, Al₄(SiO₄)₃ 5H₂O), Magnesiumsilicat (Mg₂SiO₄, MgSiO₃), Calciumsilicat (Ca₂SiO₄), Aluminiumcalciumsilicat (Al₂O₃ CaO 2SiO₂), Calciummagnesiumsilicat (CaMgSiO₄), Calciumcarbonat (CaCO₃), Zirconiumoxid (ZrO₂), Zirconiumhydroxid [ZrO(OH)₂ nH₂O], Zirconiumcarbonat [Zr(CO₃)₂] und kristallinen Aluminosilicaten, die die Ladungen kompensierende Wasserstoffatome, Alkalimetalle oder Erdalkalimetalle enthalten, oder einer Mischung davon ausgewählt wird.

7. Verfahren nach dem vorhergehenden Anspruch, **dadurch gekennzeichnet, dass** es sich bei dem Füllstoff um Siliciumdioxid (SiO₂) handelt.

8. Verfahren nach einem der vorhergehenden Ansprüche, **dadurch gekennzeichnet, dass** der Füllstoff mit Hilfe eines oder mehrerer Hydrophobierungsmittel der folgenden Formel (I) teilweise hydrophobiert ist:
Eₙ-F (Formula I)
wobei
- n für eine ganze Zahl mit einem Wert von 1 oder 2 steht,
- dann, wenn n den Wert 1 hat, F für eine einwertige Gruppe steht,
- dann, wenn n den Wert 2 hat, F für eine zweiwertige Gruppe steht,
- E für eine funktionelle Gruppe steht, die zur physikalischen und/oder chemischen Anbindung an den Füllstoff befähigt ist und in ihrer Struktur mindestens eine Alkyl- bzw. Alkylenkette mit 1 bis 18 Kohlenstoffatomen, die der Gruppe E hydrophobierende Eigenschaften verleiht, umfasst;
- F für eine Gruppe steht, die gegebenenfalls physikalisch und/oder chemisch an das Dienelastomer binden kann.

9. Verfahren nach dem vorhergehenden Anspruch, **dadurch gekennzeichnet, dass** das Hydrophobierungsmittel die folgende Formel (II) aufweist:
[G₍₃₋ₘ₎(L-K)ₘSi-L-]ₙ-F (II)
wobei
dann, wenn n den Wert 1 hat, F für die nachstehend definierte Gruppe K steht und m von 0 bis 2 variiert,
und
dann, wenn n den Wert 2 hat, F für eine Aminogruppe, eine Polysulfid-Gruppe (Sₓ-Gruppe) oder eine Epoxidgruppe steht und m von 0 bis 2 variiert,
und für die
die Gruppen G unabhängig voneinander aus einem Wasserstoffatom, einer C₁-C₁₈-Kohlenwasserstoffgruppe, ausgewählt aus linearen, verzweigten oder cyclischen Alkylgruppen, Aralkylgruppen, Alkylarylgruppen und Arylgruppen, wie einem Phenyl, einem Benzyl, einem Cyclopentyl, einem Cyclohexyl, einer Alkoxygruppe (R₁O)-, worin R¹ für einen gesättigten C₁-C₈-Alkylrest steht, wie beispielsweise die Methyl-, Ethyl- und Isopropylgruppen, vorzugsweise mindestens einer Methyl- und Ethylgruppe, einem Halogenatom, wie Fluor, Chlor, Brom und Iod, und einer Hydroxygruppe ausgewählt sind, mit der Maßgabe, dass mindestens eine Gruppe G aus einer Alkoxygruppe, einem Chloratom oder einer Hydroxygruppe ausgewählt ist,
L für einen linearen, verzweigten oder cyclischen, gesättigten oder ungesättigten C₁-C₁₈-Alkylenrest, der vorzugsweise 1 bis 8 Kohlenstoffatome aufweist, wie beispielsweise die Methylen-, Ethylen-, Isopropylen-, n-Butylen-, Octadecylen-, Phenylen-, Cyclopentylen- und Cyclohexylengruppen, und gegebenenfalls ein Sauerstoffatom enthält, steht,
K für ein Wasserstoffatom, ein Halogenatom, wie Fluor, Chlor, Brom und Iod, oder eine funktionelle Gruppe, ausgewählt aus einer Aminogruppe, einer Polyaminoalkylgruppe, einer Mercaptogruppe, einer Epoxidgruppe, einer Hydroxygruppe, einer Vinyl-gruppe, einer Acryloxygruppe, einer Methacryloxygruppe, einer -SCN-Gruppe, einer R(CO)S-Gruppe, wobei R für eine C₁-C₁₈-Alkylgruppe steht, steht.

10. Verfahren nach dem vorhergehenden Anspruch, **dadurch gekennzeichnet, dass** das Hydrophobierungsmittel aus Chlortrimethylsilan, Chlortriethylsilan, Chlortripropylsilan, Bromtrimethylsilan, Bromtriethylsilan, Bromtripropylsilan, Fluortrimethylsilan, Methoxytrimethylsilan, Methoxytriethylsilan, Methoxytripropylsilan, Chlortrimethylsilan, Dichlordimethylsilan, Trichlormethylsilan, Bromtrimethylsilan, Dibromdimethylsilan, Tribrommethylsilan, Methoxytrimethylsilan, Dimethoxydimethylsilan, Trimethoxymethylsilan, Tetramethoxysilan, Trimethoxypropylsilan, Trimethoxyoctylsilan, Trimethoxyhexadecylsilan, Dimethoxydipropylsilan, Triethoxymethylsilan, Triethoxypropylsilan, Triethoxyoctylsilan, Diethoxydimethylsilan, Octenyldimethylchlorsilan, Octodecyltrichlorsilan, (gamma-Aminopropyl)-trimethoxysilan, (gamma-Aminopropyl)triethoxysilan, (gamma-Hydroxypropyl)tripropoxysilan, (gamma-Mercaptopropyl)triethoxysilan, (gamma-Aminopropyl)dimethylethoxysilan, (gamma-Aminopropyl)dihydroxymethoxysilan, (Glycidylpropyl)trimethoxysilan, [gamma-(N-Amino-ethyl)aminopropyl]triethoxysilan, (gamma-Methacryloxypropyl)triethoxysilan, (gamma-Methacryloxypropyl)trimethoxysilan, (beta-Mercaptoethyl)triethoxysilan, [gamma-(N-Aminoethyl)-propyl]trimethoxysilan, (N-Methylaminopropyl)trimethoxysilan, (gamma-Thiocyanatopropyl)triethoxysilan, Bis(3-triethoxythiopropyl)silantetrasulfid, Vinyltriethoxysilan, Vinylphenylmethylsilan, Vinyldimethylmethoxysilan, Divinyldimethoxysilan, Divinylethyldimethoxysilan, Dimethylvinylchlorsilan, Bis(3-triethoxysilylpropyl)tetrasulfid und einer Mischung davon ausgewählt wird.

11. Verfahren nach einem der Ansprüche 8 bis 10, **dadurch gekennzeichnet, dass** das Hydrophobierungsmittel aus Octenyldimethylchlorsilan, Bis(3-triethoxysilylpropyl)tetrasulfid und einer Mischung davon ausgewählt wird.

12. Verfahren nach einem der Ansprüche 8 bis 11, **dadurch gekennzeichnet, dass** der teilweise hydrophobierte Füllstoff durch einen Hydrophobierungsgrad zwischen 0 und 1,10 Kohlenstoffatomen des Hydrophobierungsmittels nach Anbindung an den Füllstoff pro nm² Füllstoffoberfläche gekennzeichnet ist.

13. Verfahren nach einem der vorhergehenden Ansprüche, **dadurch gekennzeichnet, dass** dabei kein Koagulationsmittel verwendet wird.

14. Kautschukzusammensetzung auf Basis mindestens eines gemäß einem der Ansprüche 1 bis 13 hergestellten Dienelastomer-Füllstoff-Masterbatch.

15. Reifenlauffläche, umfassend eine Zusammensetzung nach Anspruch 14.

16. Reifen oder Halbzeug, umfassend mindestens eine Kautschukzusammensetzung nach Anspruch 14.

## Claims

1. Process for the preparation of a masterbatch in the liquid phase based on one or more diene elastomers and on one or more fillers which do not coagulate spontaneously with the said latex, comprising the following successive stages:
- preparation of a stable and homogeneous aqueous dispersion (C) by mixing
one or more diene elastomer latexes (A) with
one or more stable aqueous dispersions (B) of one or more fillers which do not coagulate spontaneously with the said latex and which are partially hydrophobized,
- homogenization of the aqueous dispersion (C),
- coagulation within the aqueous dispersion (C) of the diene elastomer latex with the fillers which do not coagulate spontaneously with the said latex by supplying mechanical energy,
- recovery of the coagulum, then
- drying the recovered coagulum in order to obtain the masterbatch.

2. Process according to Claim 1, **characterized in that** the phase of recovery of the coagulum is carried out by a filtering operation.

3. Process according to Claim 1, **characterized in that** the phase of recovery of the coagulum is carried out by a centrifuging operation.

4. Process according to any one of Claims 1 to 3, **characterized in that** the diene elastomer latex is a natural rubber latex.

5. Process according to Claim 4, **characterized in that** the diene elastomer latex is a concentrated natural rubber latex.

6. Process according to any one of the preceding claims, **characterized in that** the filler is chosen from silica (SiO₂), alumina (Al₂O₃), alumina monohydrate (Al₂O₃.H₂O), aluminium hydroxide [Al(OH)₃], aluminium carbonate [Al₂(CO₃)₃], magnesium hydroxide [Mg(OH)₂], magnesium oxide (MgO), magnesium carbonate (MgCO₃), talc (3MgO.4SiO₂.H₂O), attapulgite (5MgO.8SiO₂.9H₂O), titanium dioxide (TiO₂), titanium black (TiO₂ₙ₋₁), calcium oxide (CaO), calcium hydroxide [Ca(OH)₂], aluminium magnesium oxide (MgO.Al₂O₃), clay (Al₂O₃.2SiO₂), kaolin (Al₂O₃.2SiO₂.2H₂O), pyrophyllite (Al₂O₃.4SiO₂.H₂O), bentonite (Al₂O₃.4SiO₂.2H₂O), aluminium silicate (Al₂SiO₅.Al₄(SiO₄)₃.5H₂O), magnesium silicate (Mg₂SiO₄.MgSiO₃), calcium silicate (Ca₂SiO₄), aluminium calcium silicate (Al₂O₃.CaO.2SiO₂), calcium magnesium silicate (CaMgSiO₄), calcium carbonate (CaCO₃), zirconium oxide (ZrO₂), zirconium hydroxide [ZrO(OH)₂.nH₂O], zirconium carbonate [Zr(CO₃)₂], and crystalline aluminosilicates comprising atoms of hydrogen compensating for the charges, alkali metals or alkaline earth metals, and their mixture.

7. Process according to the preceding claim, **characterized in that** the filler is silica (SiO₂).

8. Process according to any one of the preceding claims, **characterized in that** the filler is partially hydrophobized using one or more hydrophobing agents of following formula (I):
Eₙ-F (Formula I)
in which:
- n is an integer equal to 1 or 2,
- when n has the value 1, then F is a monovalent group,
- when n has the value 2, then F is a divalent group,
- E represents a functional group which is capable of bonding physically and/or chemically to the filler and which comprises, in its structure, at least one alkyl or alkylene chain comprising from 1 to 18 carbon atoms which confers hydrophobing properties on the group E,
- F represents a group which may or may not bond physically and/or chemically to the diene elastomer.

9. Process according to the preceding claim, **characterized in that** the hydrophobing agent is of following formula (II):
[G₍₃₋ₘ₎(L-K)ₘSi-L-]ₙ-F (II)
with:
when n has the value 1, then F denotes the K group defined below and m varies from 0 to 2, and
when n has the value 2, then F denotes an amino group, a polysulphide (Sₓ) group or an epoxy group and m varies from 0 to 2,
and for which
the G groups are chosen, independently of one another, from a hydrogen atom, a C₁-C₁₈ hydrocarbon group chosen from linear, branched or cyclic alkyl groups, aralkyl groups, alkylaryl groups and aryl groups, such as a phenyl, a benzyl, a cyclopentyl, a cyclohexyl, an alkoxy (R₁O)- group, in which R₁ represents a saturated C₁-C₈ alkyl radical, such as, for example, the methyl, ethyl and isopropyl groups, preferably at least one methyl and ethyl group, a halogen atom, such as fluorine, chlorine, bromine and iodine, and a hydroxyl group,
provided that at least one G group is chosen from an alkoxy group, a chlorine atom or a hydroxyl group,
L denotes a saturated or unsaturated and linear, branched or cyclic C₁-C₁₈ alkylene radical, preferably of 1 to 8 carbon atoms, such as, for example, the methylene, ethylene, isopropylene, n-butylene, octadecylene, phenylene, cyclopentylene and cyclohexylene groups, optionally comprising an oxygen atom,
K denotes a hydrogen atom, a halogen atom, such as fluorine, chlorine, bromine and iodine, or a functional group chosen from an amino group, a polyaminoalkyl group, a mercapto group, an epoxy group, a hydroxyl group, a vinyl group, an acryloyloxy group, a methacryloyloxy group, an -SCN group or an R(CO)S- group with R being a C₁-C₁₈ alkyl group.

10. Process according to the preceding claim, **characterized in that** the hydrophobing agent is chosen from chlorotrimethylsilane, chlorotriethylsilane, chlorotripropylsilane, bromotrimethylsilane, bromotriethylsilane, bromotripropylsilane, fluorotrimethylsilane, methoxytrimethylsilane, methoxytriethylsilane, methoxytripropylsilane, chlorotrimethylsilane, dichlorodimethylsilane, trichloromethylsilane, bromotrimethylsilane, dibromodimethylsilane, tribromomethylsilane, methoxytrimethylsilane, dimethoxydimethylsilane, trimethoxymethylsilane, tetramethoxysilane, trimethoxypropylsilane, trimethoxyoctylsilane, trimethoxyhexadecylsilane, dimethoxydipropylsilane, triethoxymethylsilane, triethoxypropylsilane, triethoxyoctylsilane, diethoxydimethylsilane, octenyldimethylchlorosilane, (γ-aminopropyl)trimethoxysilane, (γ-aminopropyl)triethoxysilane, (gamma-hydroxypropyl)tripropoxysilane, (γ-mercaptopropyl)triethoxysilane, (γ-aminopropyl)dimethylethoxysilane, (y-aminopropyl)dihydroxymethoxysilane, (glycidylpropyl)trimethoxysilane, [γ-(N-aminoethyl)aminopropyl]triethoxysilane, (γ-methacryloyloxypropyl)triethoxysilane, (γ-methacryloyloxypropyl)trimethoxysilane, (β-mercaptoethyl)triethoxysilane, [γ-(N-aminoethyl)aminopropyl]trimethoxysilane, (N-methylaminopropyl)trimethoxysilane, (γ-thiocyanatopropyl)triethoxysilane, bis-(3-triethoxythiopropyl) silane tetrasulphide, vinyltriethoxysilane, vinylphenylmethylsilane, vinyldimethylmethoxysilane, divinyldimethoxysilane, divinylethyldimethoxysilane, dimethylvinylchlorosilane, bis(3-triethoxysilylpropyl) tetrasulphide and their mixture.

11. Process according to any one of Claims 8 to 10, **characterized in that** the hydrophobing agent is chosen from octenyldimethylchlorosilane, bis(3-triethoxysilylpropyl) tetrasulphide and their mixture.

12. Process according to any one of Claims 8 to 11, **characterized in that** the partially hydrophobized filler is **characterized by** a degree of hydrophobation of between 0 and 1.10 carbon atoms carried by the hydrophobing agent, once attached to the filler, per nm² of filler surface area.

13. Process according to any one of the preceding claims, **characterized in that** the process does not use a coagulating agent.

14. Rubber composition based on at least one masterbatch of diene elastomer and of filler prepared according to any one of Claims 1 to 13.

15. Tyre tread comprising a composition according to Claim 14.

16. Tyre or semifinished product comprising at least one rubber composition according to Claim 14.
